Europäisches Patentamt

European Patent Office

Office européen des brevets

(11) Veröffentlichungsnummer: **0 462 429 A2**

(12) **EUROPÄISCHE PATENTANMELDUNG**

(21) Anmeldenummer: **91108732.8**

(51) Int. Cl.⁵: **H04J 3/06**

(22) Anmeldetag: **28.05.91**

(30) Priorität: **19.06.90 DE 4019536**

(43) Veröffentlichungstag der Anmeldung:
**27.12.91 Patentblatt 91/52**

(84) Benannte Vertragsstaaten:
**BE DE GB GR IT NL SE**

(71) Anmelder: **SIEMENS AKTIENGESELLSCHAFT**
**Wittelsbacherplatz 2**
**W-8000 München 2(DE)**

(72) Erfinder: **Sontheim, Bernhard, Dipl.-Ing.**
**Am Frischanger 11**
**W-8120 Weilheim(DE)**

(54) **Schaltungsanordnung zur digitalen Datenübertragung.**

(57) Es wird eine Schaltung zur digitalen Datenüber-tragung zwischen einer Ausgabeeinheit (AE) und ei-ner Eingabeeinheit (EE) angegeben, bei der eine weitgehend fehlerfreie Datenübertragung bei beliebi-ger Phasenbeziehung zwischen den Kontrollsignalen (SAG und SEG) zur Steuerung des Datenflusses erfolgt. Dies wird dadurch erreicht, daß die Phasen-beziehung zwischen den beiden Kontrollsignalen (SAG und SEG) bestimmt wird und in Abhängigkeit davon die Zwischenspeicherung der zu übertragen-den Dateneinheiten gesteuert wird.

FIG 1

Die Erfindung betrifft eine Schaltungsanordnung zur digitalen Datenübertragung zwischen einer Ausgabeeinheit und einer Eingabeeinheit, insbesondere in Teilnehmeranschlußeinheiten eines Ringleitungssystems, bei der die Ausgabeeinheit die Gültigkeitsdauer einer ausgegebenen Dateneinheit durch ein erstes Kontrollsignal an einem ersten Kontrollausgang darstellt und die Eingabeeinheit den benötigten Zeitraum für den Empfang einer Dateneinheit durch ein zweites Kontrollsignal an einem zweiten Kontrollausgang darstellt, und bei der die beiden Kontrollsignale eine nahezu gleiche Frequenz bei beliebiger Phasenbeziehung aufweisen.

In digitalen Systemen, deren einzelne Komponenten durch voneinander unabhängige Taktsignalgeber in ihrem Zeitverhalten bestimmt sind, ist die Datenübertragung mit hohen Übertragungsraten zwischen den Komponenten durch beliebige Phasenbeziehungen und Phasenschwankungen zwischen den Taktsignalgebern der Komponenten erschwert. Diese Schwierigkeiten treten beispielsweise in der digitalen Verarbeitung von akustischen Signalen bei der Kopplung von Signalprozessoren auf. Dieselben Schwierigkeiten ergeben sich bei Ringleitungssystemen zur Informationsübertragung zwischen mehreren Teilnehmeranschlußeinheiten, wie sie beispielsweise aus der Zeitschrift NTZ Band 41 (1988) H. 12, Seiten 677 bis 679 bekannt sind. Dabei wird zur Erzielung hoher Übertragungsraten von über 200 Megabaud zwischen den einzelnen Anschlußeinheiten das Leitungssystem meist in Form eines optischen Ringes ausgebildet, bei dem die einzelnen Anschlußeinheiten über ein Lichtwellenleiter-Leitungssystem verbunden sind. Die Anschlußeinheiten bestehen typisch aus einem Empfangsmodul und einem Sendemodul, die voneinander unabhängige Taktsignalquellen beinhalten. Im sogenannten Transitfall ist dabei eine Datenübertragung zwischen Empfangsmodul und Sendemodul mit den oben erwähnten Schwierigkeiten notwendig.

Diesen Schwierigkeiten wird nach der Erfindung dadurch begegnet, daß einer der beiden Kontrollausgänge mit einem Eingang einer Verzögerungseinrichtung verbunden ist, die das an ihrem Eingang auftretende Kontrollsignal an den ersten Ausgang von n Ausgängen als erstes Ausgangssignal unmittelbar, an den zweiten Ausgang mit einer Zeitverzögerung von zumindest annähernd einem n-ten Teil der Periodendauer des Kontrollsignals als zweites Ausgangssignal und an jeden weiteren, k-ten Ausgang mit einer Zeitverzögerung von zumindest annähernd einem

$$\frac{(k-1)}{n}$$

ten Teil der Periodendauer des Kontrollsignals als k-tes Ausgangssignal durchschaltet, daß an die n Ausgänge der Verzögerungseinrichtung eine Begrenzungseinrichtung geschaltet ist, die den Aktivzustand der n zeitlich verschobenen Ausgangssignale auf zumindest annähernd die Hälfte der Periodendauer des Kontrollsignals begrenzt und die so erhaltenen Referenzsignale an ihren n Ausgängen darstellt, daß die n Ausgänge der Begrenzungseinrichtung mit n Eingängen einer Logikeinrichtung verbunden sind, deren (n + 1)-ter Eingang an den jeweils anderen der beiden Kontrollausgänge angeschlossen ist, und die der Bestimmung der Phasenbeziehung zwischen den beiden Kontrollsignalen und der von dieser Phasenbeziehung abhängigen Ansteuerung einer Multiplexereinrichtung dient, wobei die Phasenbeziehung zwischen den beiden Kontrollsignalen bei jedem Übergang des Kontrollsignales am (n + 1)-ten Eingang der Logikeinrichtung vom inaktiven in den aktiven Zustand bestimmt wird und diese Bestimmung auf einer Auswertung des Momentanzustandes der n Referenzsignale beruht, daß n Eingänge der durch die Logikeinrichtung gesteuerten Multiplexereinrichtung mit den n Ausgängen der Verzögerungseinheit verbunden sind, und ein Ausgang der Multiplexereinrichtung an den Eingang einer Signalumformeinrichtung angeschlossen ist, und daß ein Ausgang der Signalumformeinrichtung mit einem Steuereingang einer Speichereinrichtung verbunden ist, die zwischen einen Datenausgang der Ausgabeeinheit und einen Dateneingang der Eingabeeinheit geschaltet ist und der Zwischenspeicherung der Dateneinheiten dient.

Damit wird die Phasenlage zwischen den beiden Kontrollsignalen bestimmt und die Zwischenspeicherung der Dateneinheit in Abhängigkeit von der Phasenlage gesteuert. Die Fehlerwahrscheinlichkeit bei der Datenübertragung wird deutlich reduziert. Da im Fehlerfall die fehlerhafte Dateneinheit mehrmals gesendet werden muß, wird durch eine Verringerung der Fehlerwahrscheinlichkeit auch die effektive Übertragungsrate gesteigert.

Die Genauigkeit mit der die Phasenlage bestimmt wird, hängt von der Zahl n ab. Durch die logische Auswertung von n Referenzsignalen sind 2 × n Phasenbeziehungen unterscheidbar. Für n = 5 beispielsweise werden 10 unterschiedliche Phasenbeziehungen unterschieden, die Genauigkeit der Bestimmung beträgt also 360°/10 = 36° (maximale Phasenverschiebung/2 × n). Für eine möglichst genaue Phasenbestimmung ist daher ein n mit "großem" Wert erforderlich. Eine erfindungsgemäße Schaltungsanordnung mit "großem" n erfordert allerdings einen entsprechenden Aufwand bei der Realisierung.

Ein günstiger Kompromiß zwischen den Forderungen nach hoher Genauigkeit der Phasenbestimmung bzw. nach geringem Realisierungsaufwand ist aber dann gegeben, wenn der Wert von n gleich drei ist.

Eine vorteilhafte Weiterbildung der Erfindung besteht darin, daß die n Ausgänge der Begrenzungseinrichtung mit einer Kombinationsschaltung verbunden sind, die im Fehlerfall, der durch Übereinstimmung der Signale auf den n Ausgängen der Begrenzungseinrichtung charakterisiert ist, die Schaltungsanordnung in einen Ausgangszustand versetzt und eine Zwischenspeicherung der auf dem Datenausgang der Ausgabeeinheit vorliegenden Dateneinheit verhindert.

Um eine eventuelle Wortverdopplung bzw. einen Wortverlust innerhalb einer Teilnehmeranschlußeinheit eines Ringleitungssystems erkennen und ausgleichen zu können, wird die Schaltungsanordnung günstig derart weitergebildet, daß zur Kontrolle der Datenübertragung innerhalb einer Teilnehmeranschlußeinheit eines Ringleitungssystem an die Ausgabeeinheit eine erste Addierstufe zur Quersummenbildung über eine Gruppe von Dateneinheiten angeschlossen ist, daß an die Eingabeeinheit eine weitere Addierstufe zur Quersummenbildung über eine Gruppe von Dateneinheiten angeschlossen ist, und daß die Ausgänge der beiden Addierstufen an eine Prüfeinrichtung angeschlossen sind, die die beiden Quersummen vergleicht und im durch Nichtüberein- stimmung charakterisierten Fehlerfall eine nochmalige Aussendung der fehlerhaften Gruppe von Dateneinheiten durch die im Übertragungsweg vorausliegende Sendestelle veranlaßt.

Für den Einsatz in Teilnehmeranschlußeinheiten eines Ringleitungssystemes, deren Ausgabeeinheit und Eingabeeinheit die Kontrollsignale AG bzw. EG nicht unmittelbar vorgeben, wird die Schaltung vorteilhaft derart abgeändert, daß zur Erzeugung von, den beiden Kontrollsignalen AG, EG entsprechenden Ersatzsignale AG* und EG* je eine Schaltung vorgesehen ist, die aus der Information auf der Ringleitung entsprechende Signale ableitet, und daß AG* und EG* in gleicher Weise wie AG und EG zur Steuerung der Datenübertragung herangezogen werden.

Im folgenden wird die Erfindung anhand von Zeichnungen näher erläutert.

Fig. 1 zeigt   ein beispielhaftes Blockschaltbild der Erfindung

Fig. 2 zeigt   ein Impulsdiagramm zur Veranschaulichung der Zeitverhältnisse bei einer Schaltung nach Fig. 1

Fig. 3 zeigt   in einem Blockschaltbild den Aufbau einer Anschlußeinheit für ein Ringleitungssystem

Fig. 4 zeigt   eine beispielhafte Phasenbeziehung der Kontroll- und Datensignale einer Anschlußeinheit nach Fig. 3

Fig. 5   zeigt eine Ausführungsform der erfindungsgemäßen Schaltungsanordnung

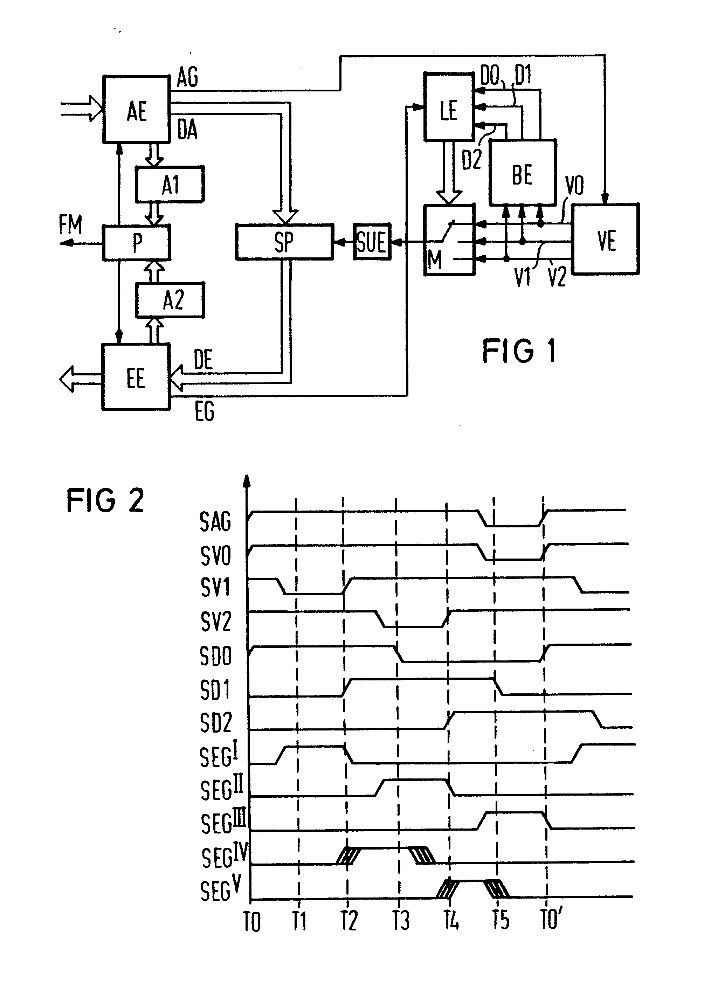

Die Schaltungsanordnung nach Fig. 1 besteht aus einer Ausgabeeinheit AE mit einem Datenausgang DA und einem ersten Kontrollausgang AG, einer Verzögerungseinrichtung VE mit einem Eingang, drei Ausgängen V0, V1, V2, einer Begrenzungseinrichtung BE mit drei Eingängen und drei Ausgängen D0, D1, D2, einer Logikeinrichtung LE mit vier Eingängen und einem Steuerausgang, einer Multiplexereinrichtung M mit drei Signaleingängen, einem Signalausgang und einem Steuereingang, einer Signalumformeinrichtung SUE, einer Speichereinrichtung SP, einer Eingabeeinheit EE mit einem Dateneingang DE und einem zweiten Kontrollausgang EG, sowie zwei Addierstufen A1, A2 und eine Prüfeinrichtung P.

Der erste Kontrollausgang AG der Ausgabeeinheit AE ist mit dem Eingang der Verzögerungseinrichtung VE verbunden. Die drei Ausgänge V0, V1, V2 der Verzögerungseinrichtung VE sind mit den drei Eingängen der Begrenzungseinrichtung BE, sowie mit den drei Eingängen der Multiplexereinrichtung M verbunden. Die drei Ausgänge D0, D1, D2 der Begrenzungseinrichtung BE sind an die drei Eingänge der Logikeinrichtung LE angeschlossen, deren vierter Eingang mit dem zweiten Kontrollausgang EG der Eingabeeinheit EE verbunden ist. Der Steuerausgang der Logikeinheit LE ist mit dem Steuereingang der Multiplexereinheit M verbunden. Der Signalausgang der Multiplexereinrichtung M ist mit einem Eingang der Signalumformeinrichtung SUE verbunden, deren Ausgang mit einem Steuereingang der Speichereinrichtung SP verbunden ist. Ein Eingang der Speichereinrichtung ist mit dem Datenausgang DA der Ausgabeeinheit AE verbunden, ein Ausgang der Speichereinrichtung S ist an den Dateneingang DE der Eingabeeinrichtung EE angeschlossen. Ausgabeeinheit AE und Eingabeeinheit EE sind jeweils mit einer Addierstufe A1 bzw. A2 verbunden. Die Ausgänge der beiden Addierstufen A1, A2 sind an eine Prüfeinrichtung P angeschlossen.

Die Funktion der Schaltung wird zusammen mit der Fig. 2 erläutert. Diese enthält in Form eines Impulsdiagrammes den Verlauf von drei aus einem ersten Kontrollsignal SAG abgeleiteten Ausgangssignale SV0, SV1, SV2 der Verzögerungseinrichtung VE sowie drei Referenzsignale SD0, SD1 und SD2 an den Ausgängen der Begrenzungseinrichtung BE in einer Schaltung nach Fig. 1, sowie fünf beispielhafte zweite Kontrollsignale SEG. Ein Aktiv-Zustand der beschriebenen Signale wird in der Fig. 2 durch hohen Pegel ("logisch 1") dargestellt, ein inaktiver Zustand durch niedrigen Pegel "logisch 0".

Die Ausgabeeinheit AE sendet mit einer bestimmten Taktrate Dateneinheiten über den Datenausgang DA aus. Die Gültigkeitsdauer einer Dateneinheit wird durch den Aktivzustand eines ersten Kontrollsignals SAG auf dem Kontrollausgang AG angezeigt. Dieses erste Kontrollsignal SAG wird über die Verzögerungseinrichtung VE geführt, die das Kontrollsignal an ihren ersten Ausgang V0 unmittelbar, an ihren zweiten Ausgang V1 mit einer Zeitverzögerung von etwa einem Drittel der Periodendauer des Kontrollsignals SAG und an ihren dritten Ausgang V2 mit einer Zeitverzögerung von etwa zwei Drittel der Periodendauer des Kontrollsignals SAG als erstes, zweites und drittes Ausgangsignal SV0, SV1, SV2 durchschaltet.

Der Aktivzustand der drei zeitlich verschobenen Ausgangssignale SV0, SV1, SV2 wird durch die Begrenzungseinrichtung BE auf etwa die Hälfte der Periodendauer des Kontrollsignals SAG begrenzt. Die solcherart erhaltenen Referenzsignale SD0, SD1 und SD2 werden einer Logikeinrichtung LE zugeführt, welche durch kombinatorische Verknüpfung der drei Referenzsignale SD0, SD1, SD2 eine gerasterte Darstellung der Phasenlage des ersten Kontrollsignales SAG liefert.

Diese Phasenlage wird durch Vergleich mit dem zweiten Kontrollsignal SEG auf die Phase Null des zweiten Kontrollsignales SEG bezogen und in Abhängigkeit davon die Multiplexereinrichtung M angesteuert, welche eines der drei zeitlich verschobenen Ausgangssignale SV0, SV1, SV2 der Verzögerungseinrichtung VE an eine Signalumformereinrichtung SUE durchschaltet, die dieses Signal invertiert und an den Steuereingang der Speichereinrichtung SP leitet. Diese übernimmt mit dem Übergang von inaktiven in den aktiven Zustand des Signals am Steuereingang (SV0, SV1 oder SV2) die auf den Datenausgängen DA anliegenden Daten und schaltet sie bis zur Übernahme der nächsten Daten auf die Dateneingänge DE durch, so daß sie von der Eingabeeinheit EE übernommen werden können.

Zur Kontrolle der Übertragung werden die übertragenen Dateneinheiten zu Gruppen zusammengefaßt. Mit der ersten Addierstufe A1 wird eine Quersumme über jede, von der Ausgabeeinheit AE gesendete Gruppe von Dateneinheiten gebildet. Mit der zweiten Addierstufe A2 wird die Quersumme über jede, von der Eingabeeinheit EE empfangene Gruppe von Dateneinheiten gebildet. Die beiden Quersummen werden von der Prüfeinrichtung P verglichen und im Fall der Nichtübereinstimmung über den Fehlermeldungsausgang FM eine Neuaussendung der Gruppe von Dateneinheiten bei der im Übertragungsweg vorausgehenden (nicht dargestellten) Sendestelle veranlaßt.

Im folgenden werden fünf beispielhafte Fälle der Phasenbeziehung zwischen den beiden Kontrollsignalen SAG und SEG beschrieben. In der Fig. 2 sind diese Fälle durch fünf zweite Kontrollsignale SEG$^I$,...SEG$^V$ mit unterschiedlicher Phasenlage in Bezug auf das erste Kontrollsignal SAG dargestellt.

Fall 1 (SEG$^I$):

Der "0"⇒"1" Übergang von EG$^I$ liegt zwischen den Zeitpunkten T0 und T1. In diesem Zeitraum haben die drei Referenzsignale folgende Werte: SD0 = 1, SD1 = 0, SD2 = 0. Die Werte der drei Referenzsignale SD0, SD1, SD2 werden durch die Logikeinrichtung LE in einen Steuerbefehl für die Multiplexereinrichtung M umgesetzt, so daß diese das an einem ihrer drei Signaleingänge anliegende Ausgangssignal SV2 an ihren Signalausgang durchschaltet. Die Übernahme der Dateneinheit erfolgt daher zum Zeitpunkt T4, der durch einen "0"⇒"1" Übergang des dritten Ausgangssignals SV2 gekennzeichnet ist. Zu diesem Zeitpunkt T4 ist SAG aktiv, die Dateneinheit ist gültig. Am Ausgang der Speichereinrichtung SP und an dem damit verbundenen Dateneingang DE der Eingabeeinheit liegt die Dateneinheit bis zum Zeitpunkt T4 der nächsten Periode an, wodurch die korrekte Übernahme durch die Eingabeeinheit EE während des Aktivzustandes von EG$^I$ möglich ist.

Fall 2 (SEG$^{II}$):

Der "0"⇒"1" Übergang von EG$^{II}$ liegt zwischen T2 und T3, die Referenzsignale haben folgende Werte: SD0 = 1, SD1 = 1, SD2 = 0. Die Multiplexereinrichtung M schaltet Ausgangssignal SV0 durch. Die Übernahme der Daten erfolgt zum Zeitpunkt T0 ("0"⇒"1" Übergang von SV0).

Fall 3 (SEG$^{III}$):

Der "0"⇒"1" Übergang von EG$^{III}$ liegt zwischen T4 und T5, die Referenzsignale haben folgende Werte: SD0 = 0, SD1 = 1, SD2 = 1. Die Multiplexereinrichtung M schaltet SV1 durch. Die Übernahme der Dateneinheit erfolgt zum Zeitpunkt T2.

Fall 4 (SEG$^{IV}$):

Die Phasenbeziehung zwischen SAG und SEG ist nicht konstant, der "0"⇒"1" Übergang von EG$^{IV}$ liegt ursprünglich zwischen T2 und T3 und wandert in den Zeitraum T1-T2. Die Multiplexereinrichtung M schaltet zuerst SV0 durch, danach SV2. Die Übernahme der Dateneinheit durch die Speichereinrichtung SV erfolgt ursprünglich zum Zeitpunkt T0, danach zum Zeitpunkt T4.

Fall 5 (SEG$^V$):

Die Phasenbeziehung zwischen SAG und $SEG^V$ ist nicht konstant, der "0"⇒"1" Übergang von $SEG^V$ liegt zwischen T3 und T4 und wandert in den Zeitraum T4-T5. Die Multiplexereinrichtung M schaltet zuerst SV0 durch, danach SV1. Die Übernahme der Dateneinheit erfolgt zuerst zum Zeitpunkt T0, danach zum Zeitpunkt T2.

Der Fall 1 unterscheidet sich von den Fällen 2 und 3 dadurch, daß - bezogen auf eine Periodendauer des Kontrollsignals SAG - die Übernahme einer Dateneinheit durch die Eingabeeinrichtung EE während des aktiven ("1") Zustandes von $SEG^I$ vor der Übernahme einer Dateneinheit durch die Speichereinrichtung SP mit der positiven Flanke von SV2 erfolgt. Dieser Unterschied ist im stationären Fall bei konstanter Phasenbeziehung zwischen SAG und SEG ohne Bedeutung. Bei den seltenen Phasenschwankungen nach Fall 4 kommt es jedoch zur doppelten Übertragung einer Dateneinheit, im Fall einer Schwankung in die Gegenrichtung über den Zeitpunkt T2 kommt es zum Verlust einer Dateneinheit. Diese Fehler werden jedoch durch die Schaltung nach Fig. 1 erkannt und mittels Neuaussendung der Gruppe von Dateneinheiten bei der im Übertragungsweg vorausliegenden (nicht dargestellten) Sendestelle korrigiert.

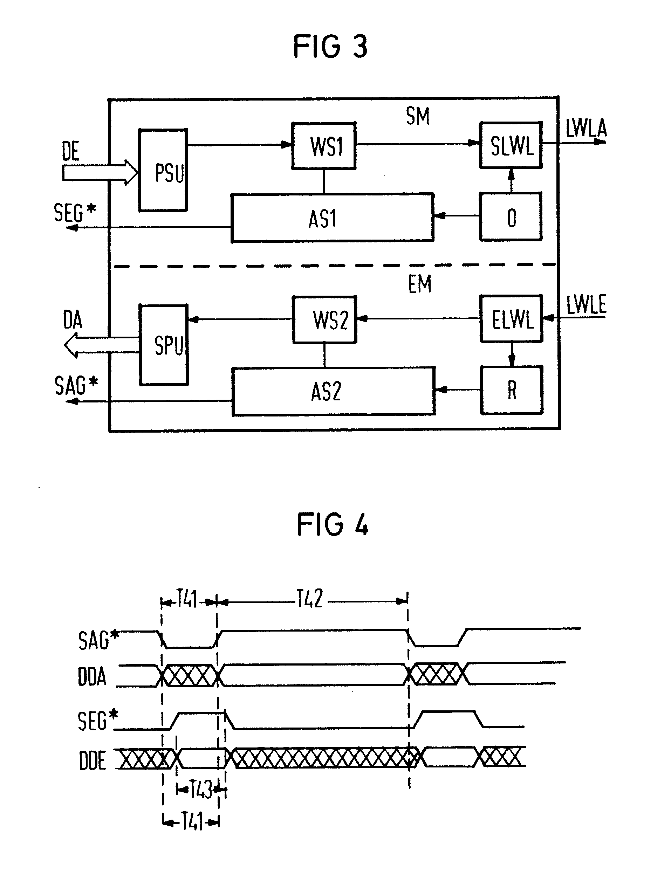

In Fig. 3 ist der Aufbau einer Anschlußeinheit für ein Ringleitungssystem, bestehend aus einem Empfangsmodul EM und einem Sendemodul SM, dargestellt.

Das Empfangsmodul EM weist einen Lichtwellenleiterempfänger ELWL für die über einen Lichtwellenleitereingang LWLE ankommenden optischen Signale auf, aus denen in einem Regenerator R die Taktfrequenz des Empfangssignales, d.h. der Empfangstakt abgeleitet wird. Der Regenerator R ist ausgangsseitig mit einer zweiten Ablaufsteuerung AS2 verbunden, die unter anderem ein erstes Ersatzsignal SAG* abgibt. Der Empfänger ELWL ist ausgangsseitig mit einer zweiten Wortsynchronisiereinrichtung WS2 verbunden, in der eine Prüfung auf synchron empfangenen Datenfluß erfolgt. Die zweite Wortsynchronisiereinrichtung WS2 ist ausgangsseitig an einen Seriell-Parallel-Umsetzer SPU angeschlossen, der die seriell eintreffenden Daten in parallele Dateneinheiten umwandelt und auf dem Datenausgang DA darstellt. Das Ersatzsignal SAG* gibt dabei die Zeitspanne an, in der die Dateneinheiten am Datenausgang DA gültig anliegen.

Im Sendemodul SM der Anschlußeinheit ist ein Taktoszillator 0 vorgesehen, der einer ersten Ablaufsteuerung AS1 den Sendetakt zuführt. Die Ablaufsteuerung AS1 stellt dabei ein Ersatzsignal SEG* zur Verfügung, das den Zeitbereich angibt, in dem die zu übertragenden Dateneinheiten an den Dateneingängen DE eines Parallel-Seriell-Umsetzers PSU gültig sein müssen. Die in die serielle Form gebrachten Daten werden über eine erste Wortsynchronisiereinrichtung WS1 einem optischen Sender bzw. Lichtwellenleitersender SLWL zugeführt und von diesem an die optische Ringleitung abgegeben.

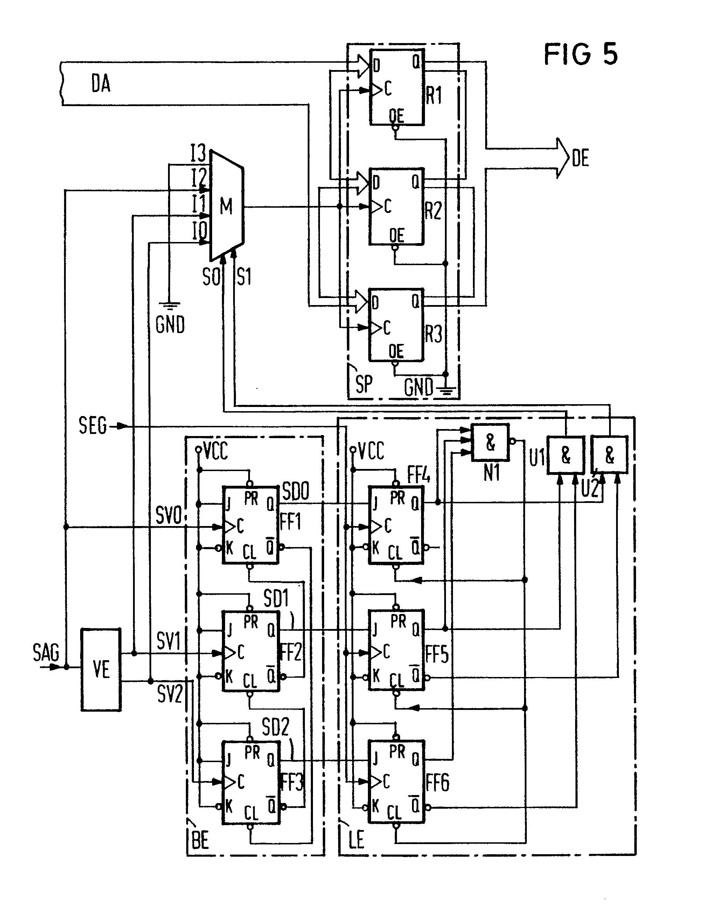

Im sogenannten Transitfall werden die vom Empfangsmodul EM empfangenen Daten über das Sendemodul SM auf den Lichtwellenleiterausgang LWLA der Anschlußeinheit übertragen. Die dafür notwendige Datenübertragung zwischen dem Datenausgang DA des Seriell-Parallel-Umsetzers SPU des Empfangsmoduls EM und dem Dateneingang DE des Parallel-Seriell-Umsetzers PSU des Sendemoduls SM erfolgt mittels einer erfindungsgemäßen Schaltungsanordnung beispielsweise nach Fig. 1 cder Fig. 5. Dabei werden anstelle der beiden Kontrollsignale SAG, SEG, zwei Ersatzsignale SAG*, SEG* zur Steuerung der Datenübertragung herangezogen.

Fig. 4 zeigt in einem Impulsdiagramm mögliche, zeitliche Bedingungen für die Datenübertragung zwischen Empfangsmodul EM und Sendemodul SM in einem Transitfall. Der Zeitraum T42, in dem eine auf dem Datenausgang DA des Seriell-Parallel-Umsetzers SPU anliegende Dateneinheit gültig ist, wird durch einen weißen Balken DDA dargestellt, der schraffierte Bereich T41 des Balkens DDA zeigt den Zeitraum, in denen der Datenausgang DA keine gültige Information führt. Mit dem weiteren Balken DDE wird in gleicher Weise der Zeitraum T43 dargestellt, in dem für einen ordnungsgemäßen Empfang durch den Parallel-Seriell-Umsetzer PSU, eine Dateneinheit auf dem Dateneingang DE gültig vorliegen muß. Die zur Steuerung der Datenübertragung herangezogenen Ersatzsignale SAG*, SEG* zeigen mit ihrem HIGH-Zustand diese Zeitbedingungen T42, T43 an.

An dem dargestellten Beispiel ist durch die Phasenverschiebung zwischen SAG* und SEG* eine direkte Übertragung nicht möglich und daher die Zwischenspeicherung der Dateneinheiten notwendig.

In Fig. 5 ist ein Beispiel einer erfindungsgemäßen Schaltungsanordnung dargestellt, mittels der Empfangsmodul EM und Sendemodul SM einer Anschlußeinheit nach Fig. 3 so verbunden werden können, daß die Übergabe der Dateneinheiten ohne mehrfache Wortverdoppelung und Wortverlust erfolgt. Die Schaltung umfaßt eine Verzögerungseinrichtung VE, die mit einem handelsüblichen Baustein aufgebaut ist, eine Begrenzungseinrichtung BE, bestehend aus drei JK-Flip-Flops FF1, FF2, FF3, eine Logikeinrichtung LE, bestehend aus drei weiteren JK-Flip-Flops FF4, FF5, FF6, zwei UND-Gattern U1, U2 und einem NICHT-Gatter N1, eine Multiplexereinrichtung M, bestehend aus einem handelsüblichen Baustein mit invertierendem Ausgang und eine Speichereinrichtung SP, bestehend aus drei Registerbausteinen R1, R2, R3.

Die JK-Flip-Flops FF1, FF2, FF3, FF4, FF5, FF6 bestehen aus handelsüblichen logischen Bausteinen. Sie weisen jeweils zwei Dateneingänge J, K, zwei Datenausgänge Q, $\overline{Q}$, einen Takteingang C, einen Setzeingang PR und einen Rücksetzeingang CL auf.

Die Registerbausteine R1, R2, R3 weisen jeweils einen Dateneingang D, einen Datenausgang Q, einen Takteingang C sowie einen sogenannten "Output-Enabel"-Eingang zur Steuerung der Übergabe der Eingangsdaten an den Ausgang Q auf.

Die Funktion der Schaltung ist wie folgt:
Das erste Kontrollsignal SAG wird über die Verzögerungseinrichtung VE geführt, die an ihren Ausgängen SAG selbst als erstes Ausgangssignal SV0, sowie das um 30 ns verzögerte zweite Ausgangssignal SV1 und das um 60 ns verzögerte dritte Ausgangssignal SV2 liefert. Da die Periodendauer von SAG ca. 95 ns beträgt, ist daher SV1 um ca. 1/3 der Periodendauer und SV2 um ca. 2/3 der Periodendauer verzögert. Die drei Ausgangssignale SV0, SV1, SV2 werden den drei Eingängen I0, I1 und I2 der Multiplexereinrichtung M, deren vierter Eingang I3 mit der Schaltungsmasse GND verbunden ist, und den Takteingängen C der drei Flip-Flops FF1, FF2 und FF3 der Begrenzungseinrichtung BE zugeführt.

Die Flip-Flops FF1, FF2, FF3 werden durch die positiven Schaltflanken der Ausgangssignale SV0, SV1, SV2 an den Takteingängen C zyklisch gesetzt. Durch die Verbindung des Rücksetzeinganges CL von Flip-Flop FF1 mit dem invertierten Daten-Ausgang $\overline{Q}$ von Flip-Flop FF2 wird durch den Setzvorgang von Flip-Flop FF2 ein Rücksetzen von Flip-Flop FF1 erreicht. Durch Verbindung der Flip-Flops FF2 und FF3, sowie FF3 und FF1 in derselben Weise wird der Aktivzustand der Referenzsignale SD0, SD1 und SD2 an den Ausgängen der Begrenzungseinrichtung BE auf ca. die halbe Periodendauer des ersten Kontrollsignales SAG begrenzt. Die Referenzsignale SD0, SD1, SD2 werden den J-Eingängen der Flip-Flops FF4, FF5, FF6 der Logikschaltung LE zugeführt und mit jeder positiven Flanke des an den Takteingängen C dieser Flip-Flops anliegenden zweiten Kontrollsignales SEG übernommen. An den Ausgängen Q dieser Flip-Flops FF4, FF5, FF6, deren K-Eingänge und Setzeingänge PR mit dem positiven Versorgungspotential VCC verbunden sind, liegt somit dauerhaft eine dreistellige binäre Darstellung der Phase von SAG zum Zeitpunkt der positiven Flanke von SEG.

Die binäre Darstellung der Phase wird durch kombinatorische Verknüpfung mittels der beiden UND-Gattern U1, U2 in ein zweistelliges Steuersignal umgewandelt und an die Steuereingänge S1 und S0 der Multiplexereinrichtung M angelegt, die von eines der drei Ausgangssignale SV0, SV1, SV2 invertiert an ihren Ausgang durchschaltet. Der verwendete Baustein umfaßt daher auch die in Fig. 1 dargestellte Signalumformeinrichtung SUE. Mit der positiven Schaltflanke des Bezugssignales der Multiplexereinrichtung M erfolgt die Übernahme der Dateneinheiten durch die drei Registerbausteine R1, R2 und R3 der Speichereinrichtung.

Eine weitere kombinatorische Verknüpfung der Ausgänge Q der Flip-Flops FF4, FF5 und FF6 der Logikeinrichtung LE mit Hilfe des NICHT-Gatters N1 verhindert bei nicht definierten Bedingungen wie z.B. einem teilweisen Ausfall der Versorgungsspannung VCC eine Zwischenspeicherung der aktuellen Dateneinheit durch das Rücksetzen der Flip-Flops FF4, FF5 und FF6. Dazu ist der Ausgang des Nicht-Gatters N1 mit den Rücksetz-Eingängen CL der drei Flip-Flops verbunden. Durch die gesteuerte Übernahme der Dateneinheiten in Abhängigkeit der Phasenbeziehung zwischen AG und EG wird die Fehlerwahrscheinlichkeit deutlich reduziert und eine leistungsfähige Datenübertragung erreicht.

**Patentansprüche**

1.  Schaltungsanordnung zur digitalen Datenübertragung zwischen einer Ausgabeeinheit (AE) und einer Eingabeeinheit (EE), insbesondere in Teilnehmeranschlußeinheiten eines Ringleitungssystems,
    bei der die Ausgabeeinheit (AE) die Gültigkeitsdauer einer ausgegebenen Dateneinheit durch ein erstes Kontrollsignal (SAG) an einem ersten Kontrollausgang (AG) darstellt,
    und die Eingabeeinheit (EE) den benötigten Zeitraum für den Empfang einer Dateneinheit durch ein zweites Kontrollsignal (SEG) an einem zweiten Kontrollausgang (EG) darstellt,
    und bei der die beiden Kontrollsignale (SAG, SEG) eine nahezu gleiche Frequenz bei beliebiger Phasenbeziehung aufweisen,
    **dadurch gekennzeichnet,**
    daß einer der beiden Kontrollausgänge (AG, EG) mit einem Eingang einer Verzögerungseinrichtung (VE) verbunden ist, die das an ihrem Eingang auftretende Kontrollsignal (SAG oder SEG) an den ersten Ausgang (V0) von n Ausgängen als erstes Ausgangssignal (SV0) unmittelbar, an den zweiten Ausgang (V1) mit einer Zeitverzögerung von zumindest annähernd einem n-ten Teil der Periodendauer des Kontrollsignals (SAG oder SEG) als zweites Ausgangssignal (SV1) und an jeden weiteren, k-ten Ausgang mit einer Zeitverzögerung von zumindest annähernd einem

$$\frac{(k-1)}{n}$$

ten Teil der Periodendauer des Kontrollsignals als k-tes Ausgangssignal durchschaltet,

daß an die n Ausgänge der Verzögerungseinrichtung (VE) eine Begrenzungseinrichtung (BE) geschaltet ist, die den Aktivzustand der n zeitlich verschobenen Ausgangssignale auf zumindest annähernd die Hälfte der Periodendauer des Kontrollsignals (SAG oder SEG) begrenzt und die so erhaltenen Referenzsignale an ihren n Ausgängen darstellt,

daß die n Ausgänge der Begrenzungseinrichtung (BE) mit n Eingängen einer Logikeinrichtung (LE) verbunden sind, deren (n + 1)-ter Eingang an den jeweils anderen der beiden Kontrollausgänge (EG oder AG) angeschlossen ist, und die der Bestimmung der Phasenbeziehung zwischen den beiden Kontrollsignalen (SAG, SEG) und der von dieser Phasenbeziehung abhängigen Ansteuerung einer Multiplexereinrichtung (M) dient,

wobei die Phasenbeziehung zwischen den beiden Kontrollsignalen (SAG, SEG) bei jedem Übergang des Kontrollsignales (SEG oder SAG) am (n + 1)-ten Eingang der Logikeinrichtung (LE) vom inaktiven in den aktiven Zustand bestimmt wird und diese Bestimmung auf einer Auswertung des Momentanzustandes der n Referenzsignale beruht,

daß n Eingänge der durch die Logikeinrichtung (LE) gesteuerten Multiplexereinrichtung (M) mit den n Ausgängen der Verzögerungseinrichtung (VE) verbunden sind, und ein Ausgang der Multiplexereinrichtung (M) an den Eingang einer Signalumformeinrichtung (SUE) angeschlossen ist,

und daß ein Ausgang der Signalumformeinrichtung (SUE) mit einem Steuereingang einer Speichereinrichtung (SP) verbunden ist, die zwischen einen Datenausgang (DA) der Ausgabeeinheit (AE) und einen Dateneingang (DE) der Eingabeeinheit (EE) geschaltet ist und der Zwischenspeicherung der Dateneinheiten dient.

2.  Schaltungsanordnung nach Anspruch 1, **dadurch gekennzeichnet,** daß der Wert von n gleich drei ist.

3.  Schaltungsanordnung nach Anspruch 1, **dadurch gekennzeichnet,** daß die n Ausgänge der Begrenzungseinrichtung (BE) mit einer Kombinationsschaltung (N1) verbunden sind, die im Fehlerfall, der durch Übereinstimmung der Signale auf den n Ausgängen der Begrenzungseinrichtung (BE) charakterisiert ist, die Schaltungsanordnung in einen Ausgangszustand versetzt und eine Zwischenspeicherung der auf dem Datenausgang (DA) der Ausgabeeinheit (AE) vorliegenden Dateneinheit verhindert.

4.  Schaltungsanordnung nach Anspruch 1, **dadurch gekennzeichnet,** daß zur Kontrolle der Datenübertragung innerhalb einer Teilnehmeranschlußeinheit eines Ringleitungssystems an die Ausgabeeinheit (AE) eine erste Addierstufe (A1) zur Quersummenbildung über eine Gruppe von Dateneinheiten angeschlossen ist, daß an die Eingabeeinheit (EE) eine weitere Addierstufe (A2) zur Quersummenbildung über eine Gruppe von Dateneinheiten angeschlossen ist, und daß die Ausgänge der beiden Addierstufen an eine Prüfeinrichtung (P) angeschlossen sind, die die beiden Quersummen vergleicht und im durch Nichtübereinstimmung charakterisierten Fehlerfall eine nochmalige Aussendung der fehlerhaften Gruppe von Dateneinheiten durch die im Übertragungsweg vorausliegende Sendestelle veranlaßt.

5.  Schaltungsanordnung nach Anspruch 1, bei der die beiden Kontrollsignale (SAG, SEG) nicht unmittelbar an den dafür vorgesehenen Kontrollausgängen (AG, EG) von Ausgabeeinheit (AE) und Eingabeeinheit (EE) einer Teilnehmeranschlußeinheit in einem Leitungssystem vorgegeben sind, **dadurch gekennzeichnet,** daß zur Erzeugung von, den beiden Kontrollsignalen (SAG, SEG) entsprechenden Ersatzsignalen (SAG*, SEG*) zwei Ablaufsteuerungen (AS2, AS1) vorgesehen sind, die aus der Information auf der Leitung zwei Ersatzsignale (SAG*, SEG*) ableiten, welche statt der beiden Kontrollsignale (SAG, SEG) zur Steuerung der Datenübertragung herangezogen werden.

FIG 1

FIG 2

## FIG 3

## FIG 4

# FIG 5